# EUROPEAN PATENT APPLICATION

(11) **EP 1 667 186 A1**
(43) Date of publication of application: **07.06.2006**
(21) Application number: 04787981.2
(22) Date of filing: 22.09.2004
(51) Int. Cl.: H01H 25/06, H01H 36/00, G06F 3/023

(54) **INFORMATION INPUT UNIT AND ELECTRONIC APPARATUS USING THIS**

(30) Priority: 26.09.2003 JP 2003335158
(71) Applicant: OMRON CORPORATION, Kyoto-shi, Kyoto 600-8530 (JP)
(72) Inventor: ARIHARA, T., Omron Corp., 801 Minamifudodo-cho, Kyoto-shi, Kyoto 600-8530 (JP)
(74) Representative: Weihs, Bruno Konrad
(86) International application number: PCT/JP2004/013798
(87) International publication number: WO 2005/031776

(57) **Abstract**

An information input device according to the invention includes: a printed board 10 on the upper surface of which Hall devices 13a and 13b and tact switches 12a through 12d are packaged; a pressing board 20 which has through holes 24a and 24b at positions corresponding to the positions of the Hall devices 13a and 13b, and is made of non-magnetic material and attached to the upper surface of the printed board 10 such that the pressing board 20 can press down the printed board 10; and a rotational operation body 30 rotatably supported by the central portion of the upper surface of the pressing board 20. An annular magnet 32 on which N poles and S poles are alternately provided with a predetermined angle pitch is coaxially attached to the lower surface of the rotational operation body 30 as one piece body. The Hall devices 13a and 13b detect magnetic flux of the magnet 32 passing through the through holes 24a and 24b of the pressing board 20 when the rotational operation body 30 is rotated. The tact switches 12a through 12d are operated through the pressing board 20 when the rotational operation body 30 is pressed down.

## Description

### Technical Field

The present invention relates to an information input device, and more particularly to an information input device which is applicable to an electronic apparatus such as a cellular phone, and to an electronic apparatus which includes this information input device.

### Background Art

An example of an information input device for a cellar phone or the like is shown in Patent Reference No. 1 (pp. 45-49, Figs. 29 thr. 33), in which internal components such as a printed board 420 and an operation dial 436 are provided on a base 402.
Patent Reference No. 1: International Publication No. 02/099617 Pamphlet

### Disclosure of the Invention,

### Problems that the Invention is to Solve

Howevex, in the above information input device in which the internal components such as the printed board 420 and the operation dial 436 are equipped on the base 402, there is problem that the numbers of components and assembling steps required are large.

Accordingly, in view of the above problem, it is an object of the invention to provide an information input device which reduces the numbers of components and assembling steps by directly attaching a rotational operation body on a printed board, and an electronic apparatus including this information input device.

### Means for Solving the Problems

In order to achieve this object, an information input device according to the invention includes: a printed board on the upper surface of which magnetic detection means and a switch are packaged; a pressing board attached to the upper surface of the printed board such that the pressing board can press down the printed board; and a rotational operation body rotatably supported by the central portion of the upper surface of the pressing board. An annular magnet on which N poles and S poles are alternately provided with a predetermined angle pitch is coaxially attached to the lower surface of the rotational operation body as one piece body. The magnetic detection means detects magnetic flux of the magnet passing through the pressing board when the rotational operation body is rotated. The switch is operated through the pressing board when the rotational operation body is pressed down.

According to the invention, since the printed board also functions as the base required in the prior-art example, the need for equipping the base is eliminated. Since the numbers of components and assembling steps are decreased, cost reduction and improvement in productivity can be attained.

In this example according to the invention, the pressing board may be made of non-magnetic material and have a through hole through which magnetic flux passes at a position corresponding to the position of the magnetic detection means.
In this example, since the pressing board is made of non-magnetic material, the annular magnet is not attracted by the pressing board. Therefore, the rotational operation body attached to the annular magnet as one piece can be smoothly rotated. Moreover, since the through hole through which magnetic flux passes is formed on the pressing board, the detection accuracy of the Hall devices is not lowered.

In another example according to the invention, a pressing spacer may be provided between the switch and the pressing board.
In this example, since the pressing spacer provides preferable operation feeling to the operator, the maneuverability can be improved.

In still another example according to the invention, a sliding spacer may be provided between the pressing board and the rotational operation body.
In this example, since the rotational operation body point-contacts the pressing board via the sliding spacer, smooth operation feeling can be obtained.

In still another example according to the invention, a plurality of legs projecting downward from the lower surface of the pressing board may be inserted through a plurality of engaging holes formed on the printed board, and claws for preventing separation may be provided at the lower edges of the legs.
In this example, the pressing board is not shifted from the attachment position nor separated therefrom. Accordingly, high positioning accuracy can be secured, and thus malfunction of the information input device can be prevented.

According to another aspect of the invention, an electronic apparatus such as a cellular phone and a portable music player may include the information input device described above.
In this example, the information input device which only requires fewer numbers of components and assembling steps can be provided.

### Advantage of the Invention

As apparent from the above description, since the printed board included in the structure according to the invention also functions as the base required in the prior-art example, the need for equipping the base is eliminated. Since the numbers of components and assembling steps are decreased, an information input device which attains cost reduction and improvement in productivity and an electronic apparatus including this information input device are provided.

### Brief Description of the Drawings

[Fig. 1] Fig. 1 is a perspective view of a disassembled information input device in an embodiment according to the invention.
[Fig. 2] Fig. 2 is a front view of the disassembled information input device shown in Fig. 1.
[fig. 3] Figs. 3A and 3B are perspective views of the information input device of the embodiment shown in Fig. 1 in the course of assembly.
[Fig. 4] Fig. 4 is a perspective view of the information input device of the embodiment shown in Fig. 1 in the course of assembly.
[Fig. 5] Fig. 5A is a plan view of the information input device of the embodiment shown in Fig. 1, and Fig. 5B is a cross-sectional view of the information input device taken along a line B-B in Fig. 5A.
[Fig. 6] Fig. 6A is an enlarged view showing a main part of the information input device of the embodiment shown in Fig. 1, and Figs. 6B and 6C are modified examples associated with Fig. 6A.
[Fig. 7] Fig. 7 is a perspective view of a cellular phone including the information input device according to the embodiment shown in Fig. 1.

### Description of Reference Numerals and Signs

1: cellular phone
2: monitor
3: information input device
4: ten-key
5: microphone
6: speaker
7: housing
8: attachment hole
10: printed board
11: rotation axis center
12a, 12b, 12c, 12d: tact switch
13a, 13b: Hall device
14a, 14b, 14c, 14d: engaging hole
20: pressing board
21: concave
22: support shaft
23: bearing
24a, 24b: through hole
25: sliding-contact spacer
26a, 26b, 26c, 26d: leg
27: claw
28: pressing spacer
30: rotational operation body
31: concave
32: magnet

### Best Mode for Carrying Out the Invention

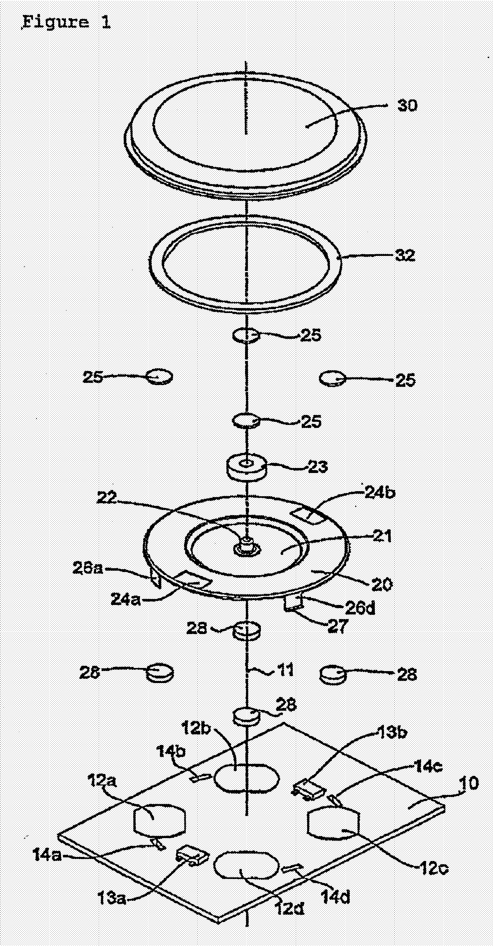

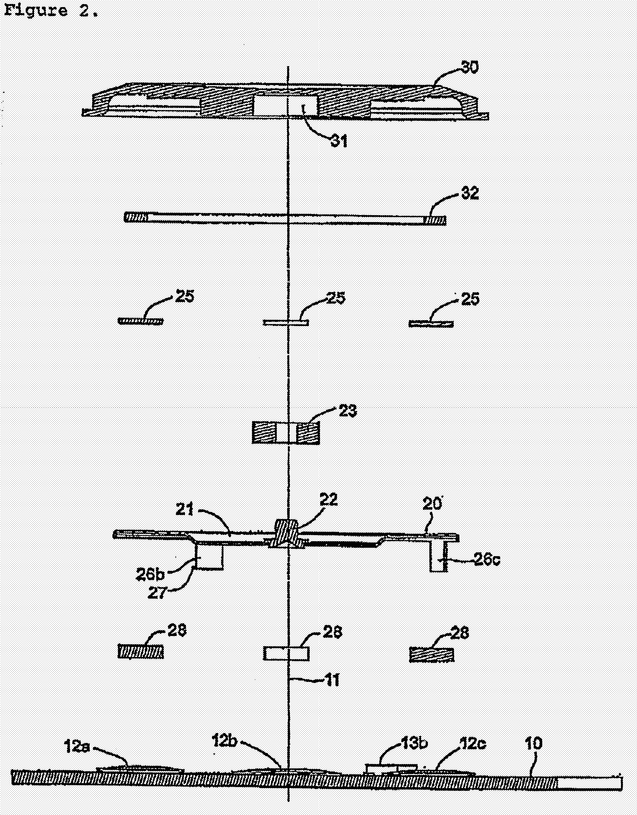

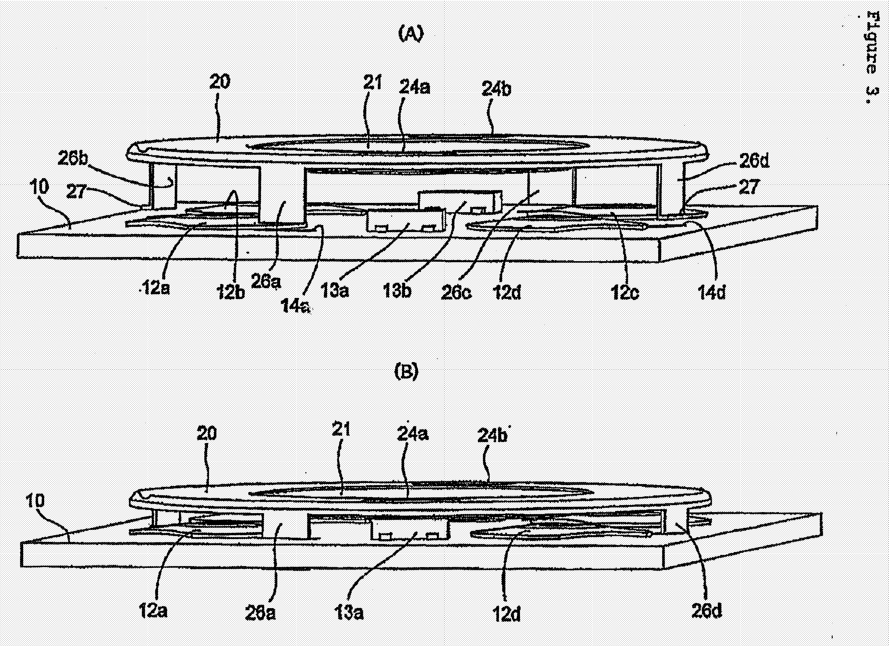

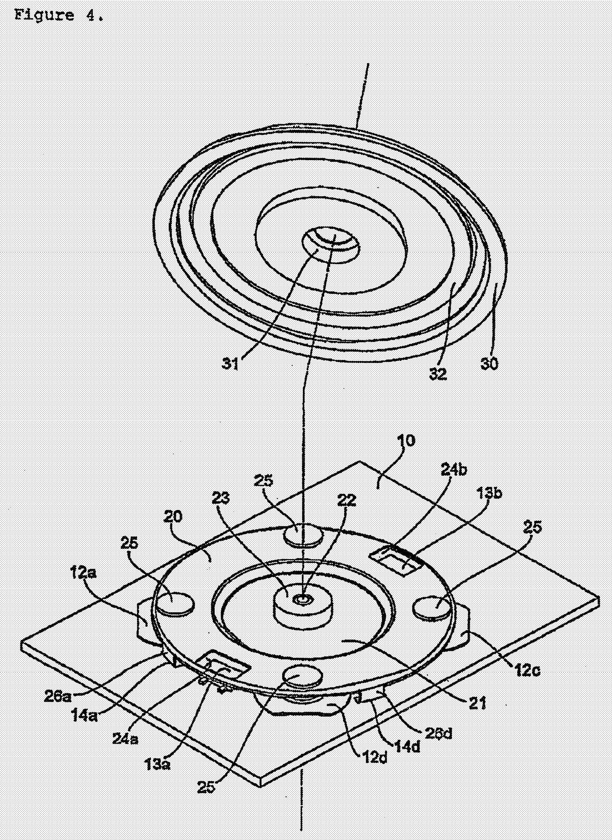

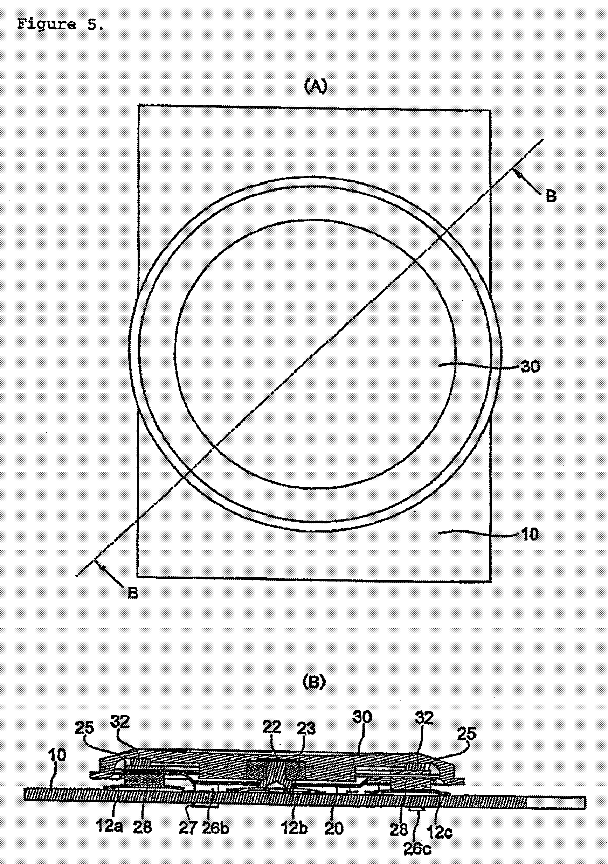

An embodiment according to the invention is hereinafter described with reference to the accompanying drawings of Figs. 1 through 7.
An information input device in this embodiment is applied to a cellular phone 1 shown in Fig. 7. In the cellular phone 1, a scroll bar (not shown) on a monitor 2 is scrolled and selection commands are supplied using an information input device 3. The cellular phone 1 also includes ten-keys 4, a microphone 5, and a speaker 6.

As illustrated in Fig. 1, the information input device 3 contains a printed board 10, a pressing board 20, and a rotational operation body 30.

Four tact switches 12a, 12b, 12c, and 12d are packaged on the surface of the printed board 10 with a predetermined pitch along the same circumference whose center corresponds to a rotation axis center 11 shown in Fig. 1. Hall devices 13a and 13b are also packaged on the surface of the printed board 10 along the same circumference. The Hall devices 13a and 13b detect changes of the magnetic field generated with the rotation of a magnet 32 which will be described later, and are disposed in such positions that phase difference is produced between the detection results of the Hall devices 13a and 13b. Engaging holes 14a, 14b, 14c, and 14d for positioning the pressing board 20, which will be described later, are formed on the printed board 10 along the same circumference whose center corresponds to the rotation axis center 11. obviously, the tact switches 12a through 12d, the Hall devices 13a and 13b, and the engaging holes 14a through 14d are not always required to be positioned on the same circumference, but may be appropriately disposed at other positions if necessary.

A control circuit (not shown) which detects the rotation direction of the rotational operation body 30 based on detection signals from the two Hall devices 13a and 13b and detects the rotation amount of the rotational operation body 30 based on detection signals from either the Hall device 13a or the Hall device 13b may be provided on the printed board 10 or connected as an external circuit.

The pressing board 20 is a thin-plate and disc-shaped component made of non-magnetic material which does not transmits magnetic flux. A concave 21 is formed at the central portion of the upper surface of the pressing board 20 by press working. A support shaft 22 as a separate component is caulked to the center of the concave 21. A bearing 23 is attached to the support shaft 22. A pair of through holes 24a and 24b through which magnetic flux can pass are formed on the upper peripheral region around the concave 21 at positions corresponding to the Hall devices 13a and 13b. Sliding-contact spacers 25 are fixed to the peripheral upper surface around the concave 21 with a predetermined pitch. Four legs 26a, 26b, 26c, and 26d engaging with the engaging holes 14a through 14d of the printed board 10 project downward from the edges of the lower surface of the pressing board 20. Separation-preventing claws 27 are formed particularly at the lower edges of the opposed pair of the legs 26b and 26d. Operation spacers 28 made of elastic material are attached to the lower peripheral surface of the pressing board 20 at positions corresponding to the tact switches 12a through 12d.

In this arrangement, the legs 26a through 26d of the pressing board 20 are inserted through the engaging holes 14a through 14d of the printed board 10 to establish engagement between the legs 26a through 26d and the engaging holes 14a through 14d. Under this engagement, the pressing board 20 is pressed down to operate the tact switches 12a through 12d. The claws 27 provided at the lower edges of the legs 26b and 26d engage with the edges of the lower surfaces of the engaging holes 14b and 14d so as to prevent separation between the legs 26b and 26d and the engaging holes 14b and 14d.

The sliding-contact spacers 25 point-contact the lower surface of the rotational operation body 30 which will be described later, and reduces friction so that operation can be performed smoothly. The operation spacers 28 give preferable operation feeling to the operator through the rotational operation body 30 and the pressing board 20.

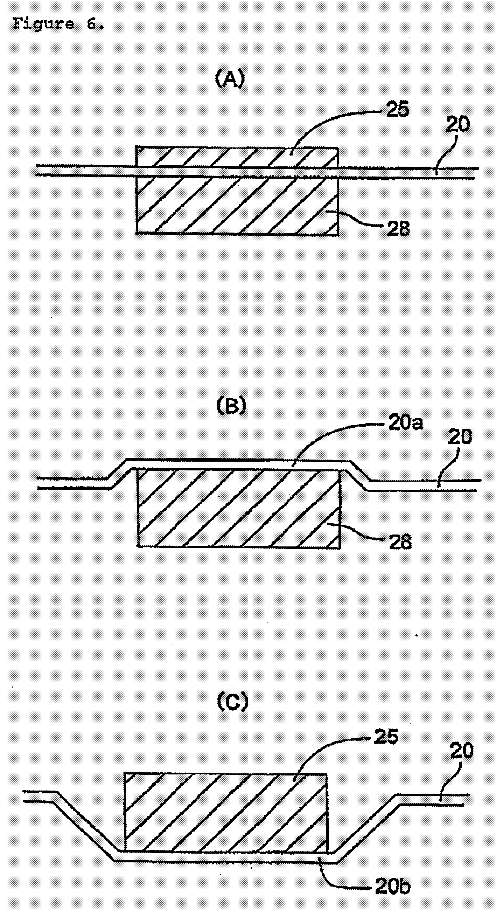

The sliding-contact spacers 25 and operation spacers 28 as separate components are not always required to be provided on the front and back faces of the pressing board 20 as illustrated in Fig. 6A, but may be equipped as necessary. Alternatively, Sliding-contact projections 20a or operation projections 20b may be formed as projected parts of the pressing board 20 by projection working as illustrated in Figs. 6B and 6C. In these modified examples, the number of components and assembling steps can be decreased, resulting in improvement in productivity and reduction in production cost.

A concave 31 engaging with the bearing 23 is formed at the center of the lower surface of the rotational operation body 30. The annular magnet 32 is coaxially attached to the lower surface of the rotational operation body 30 to engage therewith as one piece body. The magnet 32 has N poles and S poles alternately with a predetermined angle pitch. By engagement between the concave 31 and the bearing 23 attached to the pressing board 20, the rotational operation body 30 is rotatably supported. The peripheral edge of the rotational operation body 30 engages with an attachment hole 8 formed on a housing 7 of the cellular phone 1 as illustrated in Fig. 7, for example, so that separation between the rotational operation body 30 and the cellular phone 1 can be prevented.

Next, the operation method of the information input device 3 which is used as an input device for the cellular phone 1 is discussed. Since this operation method is almost similar to the operation method of the above prior-art example, only brief description is given herein.
When the rotational operation body 30 is rotated, the annular magnet 32 combined therewith as one piece body is rotated accordingly. In this condition, the Hall devices 13a and 13b detect changes of magnetic flux of the magnet 32 passing through the through holes 24a and 24b, and detect and output the rotation direction and rotation amount of the rotational operation body 30 to the not-shown control circuit. Then, the scroll bar on the monitor 2 shifts in either upward or downward in accordance with the rotation direction and rotation amount of the rotational operation body 30 based on the output from the control circuit, and stops to indicate desired data clearly. Subsequently, by pressing the rotational operation body 30 via the sliding-contact spacers 25, the pressing board 20, and the operation spacers 28, the tact switches 12a through 12d are turned on. Thereafter, signals of the tact switches 12a through 12d are transmitted to the control circuit to determine the scroll direction and scroll amount which have been already inputted. Thus, the tact switches 12a through 12d can be used as determination switches.

The tact switches 12a through 12d can be also used as input means for selecting one of up-and-down and left-and-right directions by selectively pressing the corresponding one of the four tact switches 12a through 12d disposed below the rotational operation body 30. For example, operations such as scrolls and shifts in the left-and-right, up-and-down, and front-and-back directions can be inputted through the tact switches 12a through 12d. By executing similar operations, desired data on the monitor 2 can be designated and selected.

The invention is not limited to the above embodiment. For example, the number of the tact switches may be any number as long as it is one or larger.

### Industrial Applicability

The information input device according to the invention is not only applicable to a cellular phone, but also applicable to other electronic apparatus such as a portable music player and a personal computer.

## Claims

1. An information input device, comprising:
a printed board on the upper surface of which magnetic detection means and a switch are packaged;
a pressing board attached to the upper surface of the printed board such that the pressing board can press down the printed board; and
a rotational operation body rotatably supported by the central portion of the upper surface of the pressing board, an annular magnet on which N poles and S poles are alternately provided with a predetermined angle pitch being coaxially attached to the lower surface of the rotational operation body as one piece body, **characterized in that**:
the magnetic detection means detects magnetic flux of the magnet passing through the pressing board when the rotational operation body is rotated; and
the switch is operated through the pressing board when the rotational operation body is pressed down.

2. An information input device according to claim 1, **characterized in that** the pressing board is made of non-magnetic material and has a through hole through which magnetic flux passes at a position corresponding to the position of the magnetic detection means.

3. An information input device according to claim 1 or 2, **characterized in that** a pressing spacer is provided between the switch and the pressing board.

4. An information input device according to any one of claims 1 through 3, **characterized in that** a sliding spacer is provided between the pressing board and the rotational operation body.

5. An information input device according to any one of claims 1 through 4, **characterized in that** a plurality of legs projecting downward from the lower surface of the pressing board are inserted through a plurality of engaging holes formed on the printed board.

6. An information input device according to any one of claims 1 through 5, **characterized in that** claws for preventing separation is provided at the lower edges of the legs.

7. An electronic apparatus **characterized by** including the information input device according to any one of claims 1 through 6.
